# FASCICULE DE BREVET EUROPEEN

(11) **EP 0 556 088 B1**
(45) Date de publication et mention de la délivrance du brevet: **03.01.1996**
(21) Numéro de dépôt: 93400266.8
(22) Date de dépôt: 03.02.1993
(51) Int. Cl.: B29C 70/00

(54) **Procédé pour la réalisation d'une armature de fibres pour pièce de matière composite, et pièce composite comportant une telle armature**
Verfahren zur Herstellung eine Fasernverstärkung für ein Teil aus Verbundmaterial und Verbundteil aus einer solchen Verstärkung
Method of fabricating a fibre reinforcement for a composite structure and structural composite with the same reinforcement

(30) Priorité: 11.02.1992 FR 9201510
(43) Date de publication de la demande: 18.08.1993
(73) Titulaire: AEROSPATIALE Société Nationale Industrielle, F-75781 Paris Cédex 16 (FR)
(72) Inventeur: Darrieux, Jean-Louis, F-33160 Saint-Medard-en-Jalles (FR)
(74) Mandataire: Bonnetat, Christian

(56) Documents cités:
- EP-A- 0 056 351
- EP-A- 0 261 375
- EP-A- 0 284 497
- EP-A- 0 402 099
- EP-A- 0 444 971
- WO-A-80/02254
- US-A- 4 331 495
- US-A- 4 512 835
- US-A- 4 622 254
- US-A- 4 992 317

## Description

La présente invention concerne un procédé pour la réalisation d'armatures de fibres (carbone, verre, bore, etc ...) pour des pièces de matière composite, ainsi que les armatures et les pièces composites obtenues par la mise en oeuvre dudit procédé.

On connaît de nombreux procédés pour obtenir de telles pièces de matière composite, constituées d'une armature de fibres noyée dans une matrice durcie. On commence par réaliser une armature de telles fibres distribuées suivant au moins deux directions, après quoi on introduit la matière de ladite matrice dans ladite armature et on durcit ladite matière pour former la matrice.

Par les brevets EP-A-0 073 648 et DE-A-3 147 228, il est déjà connu de réaliser une telle armature fibreuse par assemblage par couture d'une pluralité d'éléments fibreux individuels.

Cependant, ces procédés connus ne permettent pas de réaliser de façon satisfaisante des pièces composites semblables à celles en alliage léger réalisées en tôlerie d'aviation-et comprenant des panneaux, plans ou courbes, renforcés par des nervures. Dans ce qui suit, le terme "panneaux" n'est pas limité à des surfaces planes ou peu bombées ; il désigne également des surfaces aussi bombées que des coques ou des dômes.

La présente invention a pour objet de remédier à cet inconvénient.

A cette fin, selon l'invention, le procédé pour la réalisation d'une armature fibreuse pour une pièce de matière composite comportant un panneau pourvu d'une nervure, procédé selon lequel on réalise un premier élément fibreux représentatif dudit panneau et un second élément fibreux, représentatif de ladite nervure et présentant au moins une aile d'appui et une aile de raidissement orthogonales l'une à l'autre, on applique ladite aile d'appui dudit second élément fibreux contre ledit premier élément fibreux et on solidarise, par des points de piqûre, ledit premier élément fibreux et ladite aile d'appui dudit second élément fibreux, est remarquable en ce qu'on introduit, à travers la face dudit premier élément fibreux opposée audit second élément fibreux et par piquage sans nouage d'un fil continu à l'aide d'une aiguille, des fibres transversales sur toute l'étendue dudit premier élément fibreux, de telle façon que lesdites fibres transversales, qui se trouvent en regard de ladite aile d'appui dudit second élément fibreux, forment lesdits points de piqûre solidarisant lesdits premier et second éléments fibreux et que certaines desdites fibres transversales se trouvent à l'aplomb de l'aile de raidissement dudit second élément fibreux.

Ainsi, grâce à l'invention :
a) les fibres transversales de solidarisation desdits premier et second éléments fibreux font partie des fibres transversales dudit premier élément fibreux, de sorte que cette solidarisation n'apporte pas de modification des caractéristiques de ce premier élément fibreux. En effet, dans le cas où on envisagerait de solidariser les deux éléments fibreux par des fibres transversales spécialement prévues à cet effet, lesdites fibres transversales spéciales risqueraient de détériorer les propriétés mécaniques d'au moins l'un des éléments et, de plus, apporteraient une modification de masse ;
b) les fibres transversales recouvrent la totalité de la surface dudit premier élément fibreux, c'est-à-dire dans les zones de celui-ci extérieures à l'aile d'appui dudit second élément fibreux, dans celles à l'aplomb de ladite aile d'appui et même dans celles juste à l'aplomb de l'aile de raidissement dudit second élément fibreux. On remarquera à ce propos que la technique antérieure représentée par le document EP-A-0 073 648 au sujet d'une poutre (voir plus spécialement la figure 9) n'est pas capable d'implanter des fibres transversales à l'aplomb de ladite aile de raidissement. Il en résulte que cette technique antérieure ne peut donner satisfaction dans la réalisation de pièces composites selon le modèle de la tôlerie d'aviation. Toutefois, bien que, selon l'invention, la totalité de la surface dudit premier élément fibreux soit pourvue de fibres transversales, il va de soi que la densité de celles-ci n'est pas forcément uniforme sur cette surface, mais peut varier en fonction des caractéristiques mécaniques désirées pour l'armature fibreuse ;
c) l'introduction desdites fibres transversales par piquage sans nouage d'un fil continu peut aisément être réalisée par la mise en oeuvre des machines de piquage décrites dans les brevets américains US-A-4 863 660, US-A-4 917 756 et français FR-A-2 658 841.

L'opération de piquage nécessite que la course de l'aiguille de piquage soit, dans lesdites parties des éléments fibreux qui se chevauchent, au moins égale à la somme des épaisseurs desdits éléments, alors que ladite course n'a à être qu'égale à l'épaisseur du premier élément, dans les portions de celui-ci extérieures aux parties chevauchantes desdits éléments. Aussi, on fait en sorte que la course de ladite aiguille soit réglable pour être adaptée, à chaque instant, à l'épaisseur de matière fibreuse qui se trouve à l'aplomb de ladite aiguille.

Eventuellement, on peut introduire de plus des fibres transversales à travers la face dudit premier élément fibreux du côté de laquelle se trouve ledit second élément fibreux.

Après réalisation de l'armature, on introduit, de toute manière connue, la matière de la matrice dans l'armature ainsi obtenue et on durcit ladite matière en maintenant ladite armature à la forme finale désirée.

On remarquera que, pour faciliter la manipulation des éléments fibreux pendant la réalisation de l'armature, il est possible de préimprégner ceux-ci d'une matière liante et souple, telle qu'une résine synthétique durcissable. Cette matière de préimprégnation peut soit être éliminée avant réalisation de la matrice définitive, soit être utilisée pour former, à elle seule ou comme complément de matière, ladite matrice.

Les figures du dessin annexé feront bien comprendre comment l'invention peut être réalisée. Sur ces figures, des références identiques désignent des éléments semblables.

La figure 1 illustre schématiquement en perspective une armature fibreuse complexe conforme à la présente invention comportant deux éléments fibreux individuels.

Les figures 2 et 3 illustrent schématiquement une première variante de l'armature de la figure 1.

La figure 4 illustre schématiquement en perspective une machine pour la réalisation de l'armature de la figure 1.

La figure 5 montre schématiquement en perspective un dispositif de piquage pour la machine de la figure 4.

La figure 6 illustre schématiquement une autre variante de l'armature conforme à la présente invention.

Les figures 7 et 8 montrent en élévation, selon deux directions perpendiculaires et avec coupe partielle, une variante du dispositif de piquage pour la machine de la figure 4.

La figure 9 montre schématiquement en perspective une pièce complexe conforme à la présente invention, comportant trois éléments fibreux individuels.

Les figures 10 à 18 illustrent schématiquement la réalisation de la pièce de la figure 9.

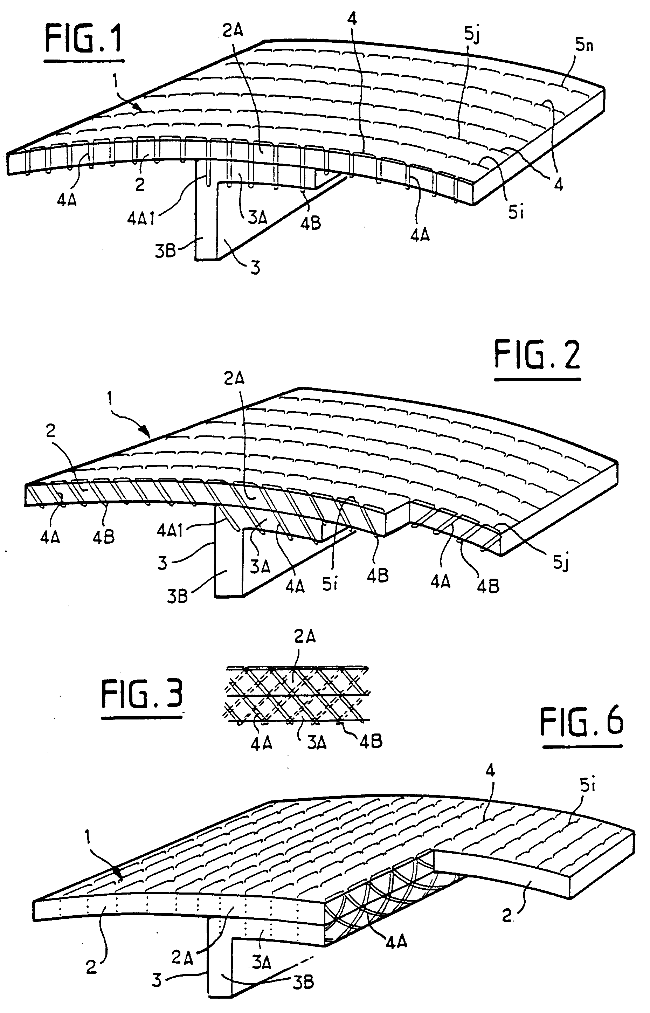

L'armature complexe 1, représentée schématiquement et partiellement sur la figure 1, comporte deux éléments fibreux individuels 2 et 3. Dans l'exemple de réalisation représenté sur cette figure, l'élément 2 présente la forme d'un panneau courbe, tandis que l'élément 3 présente la forme d'une cornière dont l'aile d'appui 3A est appliquée contre l'élément 2, l'aile 3B de l'élément 3 étant destinée à constituer un raidisseur de l'élément 2.

Dans les éléments individuels 2 et 3, les fibres constitutives peuvent être disposées de toute façon désirée en fonction des caractéristiques souhaitées pour l'armature 1 : par exemple, les fibres peuvent être disposées de façon organisée suivant deux ou plusieurs directions déterminées, ou bien elles peuvent être distribuées de façon aléatoire.

De plus, conformément à la présente invention, un fil continu 4 est introduit par piquage dans l'élément individuel 2 et dans l'aile d'appui 3A de l'élément 3, depuis la face dudit élément individuel 2 opposée à l'élément 3. Ce fil continu 4, d'une part apporte à l'élément 2 des fibres transversales 4A, d'autre part assure la solidarisation des éléments individuels 2 et 3 du fait qu'il solidarise l'aile 3A de l'élément 3 avec l'élément 2. On remarquera que certaines de ces fibres transversales 4A, désignées par la référence 4A1, se trouvent à l'aplomb de l'aile de raidissement 3B. Les points de piqûre 4B, qui forment les fibres transversales 4A et dont la profondeur est adaptée à l'épaisseur de matière fibreuse (il va de soi que l'épaisseur de matière fibreuse à piquer est plus importante à l'aplomb de l'aile d'appui 3A que dans le reste de l'élément 2), peuvent être disposés selon des rangées parallèles 5i, 5j, ..., 5n. On peut voir sur la figure 1 que lesdits points de piqûre 4B couvrent la totalité de l'étendue de l'élément 2, sans laisser dégagée une zone de celui-ci.

En fonction des caractéristiques mécaniques désirées pour l'armature 1, la densité des points de piqûre 4B (et donc des fibres transversales 4A) peut être uniforme sur toute l'étendue de l'élément 2, y compris dans la partie 2A de l'élément 2 superposée à l'aile d'appui 3A (comme cela est représenté sur la figure 1), ou bien peut être modulée de toute façon souhaitable, de façon à ce que certaines parties dudit élément 2 présentent une densité de fibres 4A supérieure ou inférieure à d'autres. Dans les deux cas, on constate que la densité des fibres transversales 4A peut correspondre exactement à la densité nécessaire pour assurer les propriétés mécaniques désirées pour l'élément 2 et/ou l'aile d'appui 3A.

Dans l'exemple de la figure 1, les points de piqûre 4B sont perpendiculaires à l'élément 2 et à l'aile d'appui 3A, de sorte que les fibres transversales 4A sont elles-mêmes perpendiculaires audit élément 2 et à l'aile d'appui 3A. En revanche, sur la figure 2, on a représenté un exemple de réalisation dans lequel les points de piqûre 4B, et donc les fibres transversales 4A, sont obliques par rapport à l'épaisseur de l'élément 2 et de l'aile d'appui 3A. De plus, les points de piqûre 4B d'une rangée de piqûre 5i sont inclinés dans un sens, alors que les points de piqûre 4B de la rangée de piqûre suivante 5j sont inclinés dans le sens opposé, de sorte que, comme cela est représenté schématiquement sur la figure 3, les fibres transversales obliques 4A de deux rangées consécutives de piqûre sont croisées. Là encore, des fibres inclinées 4A1 se trouvent à l'aplomb de l'aile de raidissement 3B de l'élément 3.

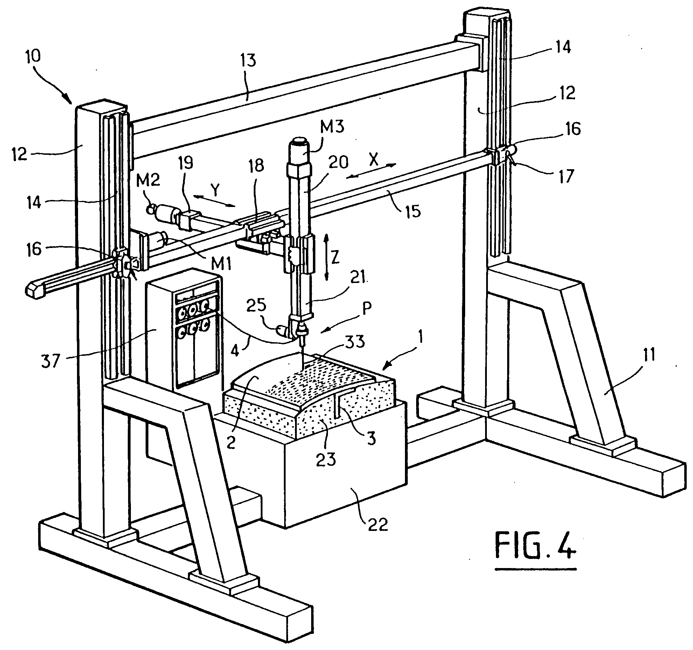

Pour réaliser les armatures 1 montrées par les figures 1 à 3, on peut mettre en oeuvre la machine 10 ne nécessitant pas le nouage du fil 4, illustrée schématiquement sur la figure 4 et décrite plus en détail dans les brevets américains US-A-4 863 660 et US-A-4 917 756.

Cette machine 10 comporte un bâti pourvu d'un piètement 11 et de montant verticaux 12, réunis à leur partie supérieure par une traverse horizontale 13.

Chaque montant vertical 12 comporte une glissière 14 et une barre transversale 15 fixée au voisinage de ses extrémités dans des coulisseaux 16 montés dans les glissières 14 dans lesquelles ils peuvent être immobilisés par des vis 17. Grâce à cet agencement, la barre 15 peut être réglée en hauteur sur les montants 12.

Sur la barre 15 est monté un chariot 18 sur lequel est monté un bras horizontal 19 coulissant transversalement et de façon réglable par rapport à la barre 15.

A l'une de ses extrémités, le bras horizontal 19 porte un bras vertical 20 également monté coulissant et de façon réglable.

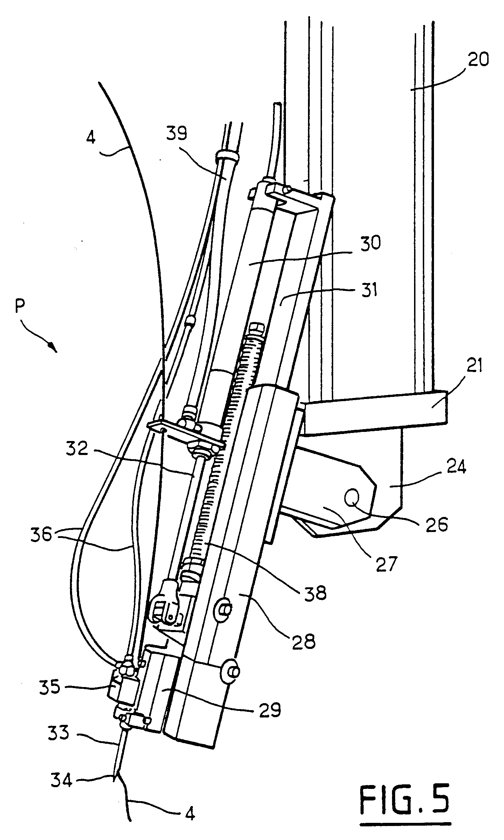

A son extrémité inférieure 21, le bras vertical 20 comporte des moyens de fixation adaptés pour recevoir un dispositif de piquage P, plus clairement visible sur la figure 5.

La machine comprend de plus un socle 22, supportant un bloc de mousse 23 dans lequel est logé l'élément 3 et sur lequel repose l'élément 2, de façon que l'aile 3A soit en appui contre ledit élément 2.

On comprend que, grâce à l'agencement de la barre 15 et des bras 19 et 20, l'extrémité 21 peut être réglée dans toute position désirée par rapport au bloc de mousse 23, suivant trois axes orthogonaux X, Y et Z au moyen de moteurs M1, M2 et M3 qui sont représentés, à titre d'exemple, montés sur la barre 15 et aux extrémités des bras 19 et 20 et entraînent ceux-ci suivant ces trois axes par l'intermédiaire de systèmes connus appropriés à pignon et crémaillère, vis sans fin ou autres.

Comme le montre la figure 5, l'extrémité inférieure 21 du bras 20 comporte une patte 24 fixée dans son prolongement et sur laquelle est fixé un moteur électrique 25, par exemple un moteur pas à pas, dont l'arbre 26 horizontal s'étend à travers la patte 24.

On remarquera que le dispositif de piquage P peut être orienté dans un plan vertical, grâce à l'action du moteur 25.

Le dispositif de piquage P, monté sur l'extrémité inférieure 21 du bras vertical 20, comprend un support 27, fixé sur l'arbre 26, sur lequel est fixé un rail 28, un bloc 29 coulissant dans le rail 28, un vérin pneumatique 30 dont le cylindre est fixé sur un prolongement 31 du rail 28, solidaire de ce dernier et dont la tige de piston 32 est reliée au bloc 29.

Le bloc 29 porte une aiguille 33, décrite en détail dans les brevets américains précités.

L'extrémité de l'aiguille, opposée à sa pointe 34, est fixée à côté d'un pince-fil pneumatique de type connu 35 monté sur le bloc 29.

Le pince-fil 35 est relié par des conduits 36 à une source d'air comprimé (non représentée) et le fil de fibres 4, provenant d'une source 37, alimente ladite aiguille 33.

Un ressort de rappel 38 est prévu entre le bloc 29 et le rail 28, de telle sorte que lorsque le vérin 30, alimenté par un tuyau 39, a poussé le bloc 29 en extension et est ensuite mis à l'échappement, le ressort 38 ramène le bloc 29 et l'aiguille en arrière.

On notera que, grâce au moteur M3 et/ou au vérin 30, on peut régler la profondeur de la pénétration de l'aiguille 33.

Comme cela est décrit dans les deux brevets américains précités, pendant l'introduction de l'aiguille 33 dans l'élément 2, le fil 4 est entraîné par ladite aiguille à travers ledit élément 2 et éventuellement à travers l'aile 3A de l'élément 3, le pince-fil 35 étant serré et la course de l'aiguille étant réglée de façon à pénétrer dans le bloc de mousse 23. Pendant le retrait de l'aiguille 33 hors de l'élément 2, le pince-fil est desserré et l'aiguille se retire en libérant le fil 4 au fur et à mesure à travers l'élément 2 et éventuellement l'aile 3A, en formant ainsi une boucle non fermée 4A qui est uniquement retenue par la mousse et par le frottement dans l'élément 2 ou les éléments 2 et 3.

Ainsi, c'est grâce à la pression élastique de la mousse se refermant sur la boucle après le retrait de l'aiguille d'une part, et au frottement et au serrage dans les éléments fibreux 2,3 d'autre part, que lors du retrait de l'aiguille, le fil 4, qui défile librement dans l'aiguille pendant ce retrait, est retenu pour former la boucle ouverte 4A.

Après l'avoir ressortie de l'élément 2 ou des éléments 2 et 3, on fait remonter l'aiguille au-dessus de la surface desdits éléments, d'une distance égale à l'épaisseur à piquer augmentée du pas de piquage, c'est-à-dire l'écartement désiré entre deux piqûres.

On actionne alors le pince-fil 35 pour bloquer le fil dans l'aiguille, on déplace le bras 20 d'un pas, et on actionne de nouveau le dispositif pour recommencer le cycle afin de former en continu une grande quantité de boucles avec le même fil 4, c'est-à-dire pour former les points de piqûre 4B, d'une rangée 5i.

Bien entendu, en agissant sur le moteur M2 à la fin d'une rangée 5i, on peut provoquer un déplacement relatif de l'aiguille 33 par rapport à l'armature 1, pour pouvoir effectuer la rangée de piqûre suivante 5j. Par ailleurs, par action du moteur 18, on peut régler l'inclinaison de l'aiguille 33 autour de l'axe 26 et donc l'inclinaison désirée pour les points de piqûre 4B de chaque rangée 5i. Il est donc facile d'obtenir les configurations de piquage illustrées par les figures 1 à 3.

On remarquera que, dans le cas où l'élément 2 présenterait une forme complexe, notamment non développable, il pourrait être nécessaire de monter le dispositif de piquage P à l'extrémité d'un bras mobile suivant un très grand nombre de degrés de liberté (par exemple 7) et éventuellement de remplacer le bloc de mousse 23 par un mandrin rotatif.

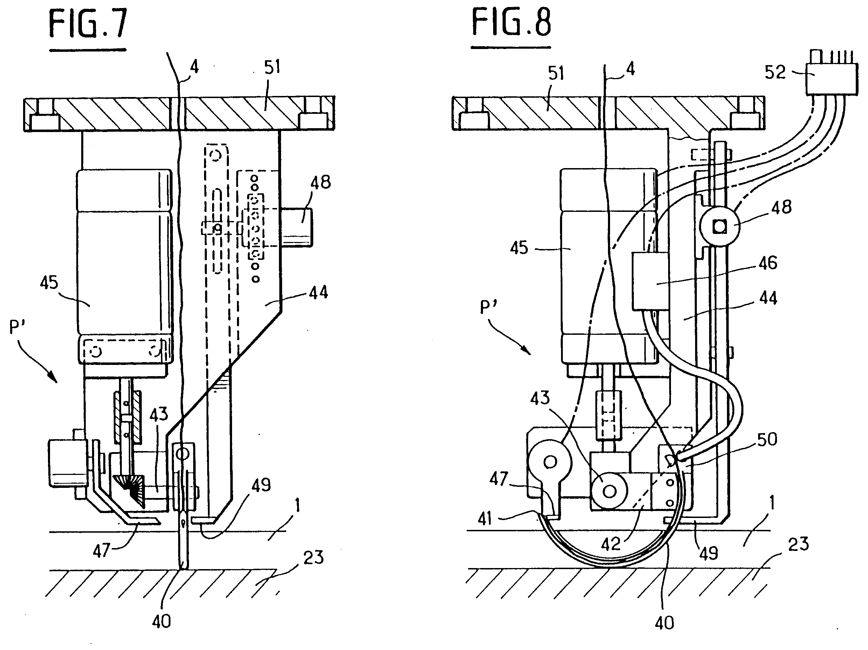

Dans la variante de réalisation de l'armature 1, montrée par la figure 6, les fibres transversales 4A présentent la forme de portions de cercles. Une telle configuration de piquage peut être obtenue par la mise en oeuvre du procédé et du dispositif décrits dans le brevet français FR-A-2 658 841. Sur les figures 7 et 8, on a représenté un dispositif de piquage courbe P' conforme à cette dernière demande de brevet et susceptible d'être fixé, par exemple, à l'extrémité inférieure 21 du bras vertical 20 de la machine 10 de la figure 4, à la place du dispositif de piquage P de la figure 5.

Comme on peut le voir sur les figures 7 et 8, l'aiguille 40 présente une forme circulaire. Elle est creuse et est parcourue par un canal interne, débouchant par un chas latéral, adjacent à la pointe 41 de ladite aiguille et disposé dans la concavité de celle-ci. Le canal interne de l'aiguille 40 est traversé par la fibre 4, sortant par ledit chas latéral.

L'extrémité de l'aiguille 40, opposée à la pointe 41, est fixée dans un porte-aiguille 42, susceptible d'être animé d'un mouvement de va-et-vient en rotation autour d'un axe 43, passant par le centre de l'aiguille 40 et au moins sensiblement perpendiculaire au plan de celle-ci.

Le porte-aiguille 42 est monté rotatif sur un bras 44, qui porte de plus un moteur 45 pour l'actionnement de l'aiguille 40 en rotation autour de l'axe 43, un organe 46 pour l'actionnement d'un organe de retenue de boucle 47, un organe 48 pour l'actionnement d'un organe de saisie de fil 49 et un pince-fil 50. Le bras 44 est solidaire d'une collerette 51 pour la fixation sur le bras vertical 20. Les différents moteurs et organes sont reliés à des dispositifs de commande (non représentés) par un connecteur 52.

On comprend donc ainsi que, lorsque le dispositif P' est monté sur la machine 10 à la place du dispositif P, il est possible d'obtenir, dans l'élément 2 et éventuellement dans l'élément 3, des lignes de piquage successives 5i, composées de points de piquage courbes 4A, comme cela est illustré sur la figure 6.

On comprend également que les différents moteurs M1, M2, M3, 25 et le vérin 30 peuvent être commandés de façon appropriée pour effectuer toutes ces opérations au moyen d'un dispositif électronique à mémoire (non représenté car ne faisant pas partie de l'invention) préalablement programmé en fonction de la forme de l'armature à réaliser. Notamment, ce dispositif électronique règle, par le moteur M3 et/ou le vérin 30, la profondeur de pénétration des aiguilles 33 et 40 pour tenir compte automatiquement des différences d'épaisseur dues à la superposition des éléments 2 et 3.

La machine 10 de la figure 4 est schématique et sa description n'a pour but que d'illustrer la présente invention et il est bien entendu possible, pour mettre en oeuvre l'invention, d'utiliser des machines plus complexes, comme celle par exemple décrite dans le brevet français FR-A-2 658 841 précité.

Après obtention des armatures des figures 1 à 3 et 6, on procède aux opérations usuelles d'imprégnation et de durcissement de matrice.

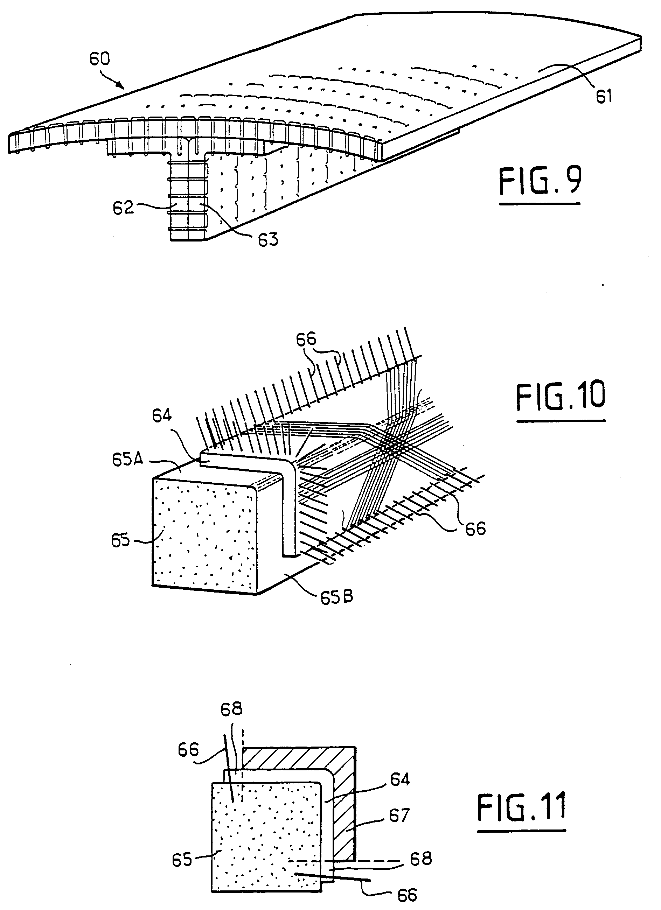

La pièce 60, conforme à la présente invention et montrée par la figure 9, comporte une plaque courbe 61, dont la face concave est renforcée par une double cornière 62,63 formant une nervure en T, ladite plaque 61 et lesdites cornières 62,63 étant constitués d'une armature fibreuse noyée dans une matrice.

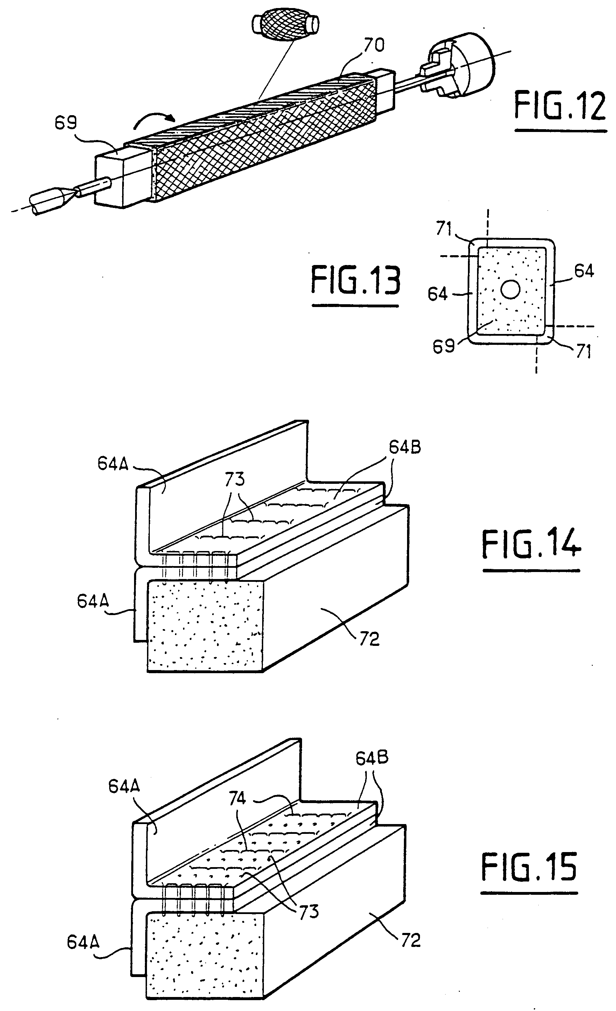

Pour réaliser un élément d'armature fibreux 64 pour les cornières 62 et 63, on peut par exemple opérer comme cela est illustré soit par les figures 10 et 11, soit par les figures 12 et 13.

Selon le processus illustré par les figures 10 et 11, sur un bloc de mousse 65 comportant deux faces 65A et 65B orthogonales, on plante des aiguilles 66 grâce auxquelles on peut former un entrelacs de fibres, par dépôt d'un fil continu suivant plusieurs directions croisées sur lesdites faces 65A et 65B du bloc 65. Lorsque cet entrelacs de fibres est suffisant pour former un élément d'armature 64, on applique dessus une contre-forme 67 et on en élimine par découpe les zones périphériques 68.

Selon le processus illustré par les figures 12 et 13, sur un mandrin rotatif 69 à section rectangulaire, on forme un enroulement de fibres 70, dont on élimine des parties angulaires 71, par découpe. On obtient alors simultanément deux éléments d'armature 64.

Quel que soit le processus mis en oeuvre, chaque élément d'armature 64 obtenu comporte une aile d'appui 64A, destinée à être appliquée contre la plaque 61, et une aile de raidissement 64B, destinée à être solidarisée à l'aile 64B de l'autre élément d'armature 64.

Pour ce faire, sur le socle 22 de la machine 10 équipée du dispositif de piquage P (figure 4), on dispose, à la place du bloc de mousse 23, un bloc de mousse 72 supportant les deux éléments d'armature 64, de façon que leurs ailes 64B soient appliquées l'une contre l'autre, les ailes 64A étant opposées.

De la façon décrite ci-dessus, à partir de la face extérieure de l'aile 64B d'un élément d'armature 64, l'aiguille 33 alimentée en fil 4 réalise des lignes de piqûre successives 73, du type de celles illustrées par la figure 1 (figure 14). Puis les deux éléments d'armature 64 sont retournés sur le mandrin 72, de façon que, à partir de la face extérieure de l'aile 64B de l'autre élément d'armature 64, l'aiguille 33 réalise des lignes de piqûre successives 74 semblables (figure 15). Ainsi, les deux éléments d'armature 64 sont fermement liées l'un à l'autre par leurs ailes 64B.

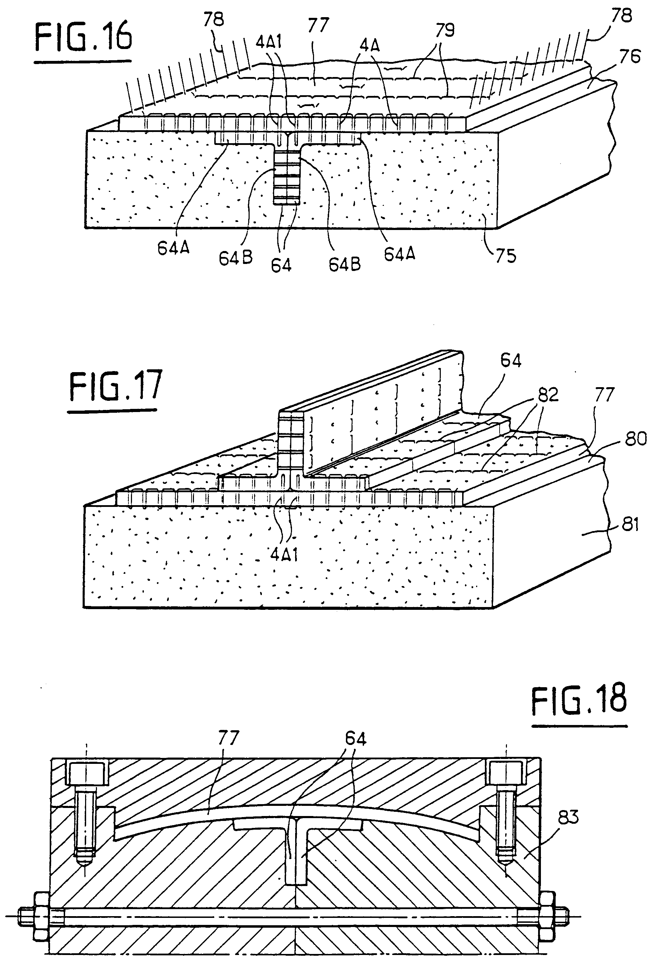

Le bloc de mousse 72 est alors remplacé, sur le socle 22, par un nouveau bloc de mousse 75 ayant une face d'appui 76 et permettant de disposer lesdits éléments d'armature 64 de façon que la face externe de leurs ailes 64A affleure ladite face d'appui 76. Sur cette dernière est alors disposée un élément d'armature 77 pour la plaque 61, éventuellement maintenue par des aiguilles 78. L'aiguille 33, alimentée en fil 4, introduit alors, à partir de la face externe de l'élément d'armature 77 opposée aux éléments 64, sur la totalité dudit élément d'armature 77, des lignes successives de piquage 79, introduisant des fibres transversales 4A dans l'élément d'armature 77 et dans les ailes 64A des éléments d'armature 64 et solidarisant lesdits éléments d'armature 64 et 77 (figure 16).

On remarquera que la machine de piquage décrite en regard des figures 4 et 5, qui ne nécessite pas de dispositif de nouage de fil du côté du mandrin 75, permet d'introduire de telles fibres transversales 4A1 même à l'aplomb des ailes 64B.

Ensuite, l'ensemble des éléments d'armature est retourné et est appliqué, par la face extérieure de l'élément d'armature 77 contre la face d'appui 80, d'un bloc de mousse 81, disposé sur le socle 22 de la machine 10, à la place du bloc 75. L'aiguille 33 peut alors introduire, à travers les faces internes de l'élément d'armature 77 et des ailes 64A des éléments d'armature 64, d'autres lignes de piqûres successives 82 (figure 17).

A ce stade de la fabrication de la pièce 60, les éléments d'armature 64 et 77 peuvent n'être constitués que des fibres sèches, ou bien leurs fibres peuvent déjà être imprégnées d'un liant souple, facilitant les manipulations desdits éléments d'armature. Ce liant souple peut alors être éliminé de toute façon appropriée. Eventuellement, il peut être conservé pour participer à la formation ultérieure de la matrice.

Ainsi, l'agencement des éléments d'armature 64 et 77, tel qu'il vient d'être obtenu, qu'il soit ou non imprégné dudit liant souple, doit être maintenant durci pour former la pièce 60.

A cet effet, cet agencement d'éléments d'armature 64 et 77, imprégné de la matière de matrice désirée par toute technique connue, est introduit dans un moule 83 où il est maintenu en forme pendant le durcissement de la matière de la matrice (figure 18). Après ce durcissement, ledit agencement d'armature forme la pièce 60.

## Revendications

1. Procédé pour la réalisation d'une armature fibreuse (1) pour une pièce de matière composite comportant un panneau pourvu d'une nervure, procédé selon lequel on réalise un premier élément fibreux (2) représentatif dudit panneau et un second élément fibreux (3), représentatif de ladite nervure et présentant au moins une aile d'appui (3A) et une aile de raidissement (3B) orthogonales l'une à l'autre, on applique ladite aile d'appui (3A) dudit second élément fibreux (3) contre ledit premier élément fibreux (2) et on solidarise, par des points de piqûre (4B), ledit premier élément fibreux (2) et ladite aile d'appui (3A) dudit second élément fibreux (3),
caractérisé en ce qu'on introduit, à travers la face dudit premier élément fibreux opposée audit second élément fibreux et par piquage sans nouage d'un fil continu (4) à l'aide d'une aiguille (33,40), des fibres transversales (4A) sur toute l'étendue dudit premier élément fibreux (2), de telle façon que lesdites fibres transversales (4A), qui se trouvent en regard de ladite aile d'appui (3A) dudit second élément fibreux (3), forment lesdits points de piqûre (4B) solidarisant lesdits premier et second éléments fibreux et que certaines (4A1) desdites fibres transversales (4A) se trouvent à l'aplomb de l'aile de raidissement (3B) dudit second élément fibreux (3).

2. Procédé selon la revendication 1,
caractérisé en ce que, pendant le piquage, on règle la course de ladite aiguille (33,40) pour l'adapter, à chaque instant, à l'épaisseur de matière fibreuse qui se trouve à l'aplomb de l'aiguille de piquage (33,40).

3. Procédé selon la revendication 1,
caractérisé en ce qu'on introduit de plus des fibres transversales à travers la face dudit premier élément fibreux du côté de laquelle se trouve ledit second élément fibreux.

4. Procédé selon la revendication 1,
caractérisé en ce que lesdites fibres transversales (4A) sont disposées parallèlement à l'épaisseur dudit premier élément fibreux.

5. Procédé selon la revendication 1,
caractérisé en ce que lesdites fibres transversales (4A) sont inclinées par rapport à l'épaisseur dudit premier élément fibreux.

6. Procédé selon la revendication 5, dans lequel lesdites fibres transversales sont disposées selon des rangées (5i) successives,
caractérisé en ce que l'inclinaison des fibres transversales (4A) d'une rangée est opposée à l'inclinaison des fibres transversales de la rangée adjacente.

7. Procédé selon la revendication 1,
caractérisé en ce que lesdites fibres transversales ont la forme de portions de cercles.

8. Procédé selon la revendication 1,
caractérisé en ce que ledit second élément fibreux (3) est formé par un unique élément en forme de cornière.

9. Procédé selon la revendication 1,
caractérisé en ce que ledit second élément fibreux présente une section en T et est formé lui-même de deux éléments fibreux (64) solidarisés, l'un de l'autre, chacun présentant la forme d'une cornière.

10. Pièce de matière composite comportant un panneau pourvu d'une nervure et constituée d'une armature fibreuse et d'une matrice, ladite armature comprenant au moins deux éléments individuels fibreux dont le premier est représentatif dudit panneau, tandis que le second élément fibreux est représentatif de ladite nervure et présente au moins une aile d'appui et une aile de raidissement orthogonales l'une à l'autre,
caractérisée en ce que ledit premier élément fibreux comporte des fibres transversales (4A,4A1) sur toute son étendue, y compris en regard de l'aile de raidissement dudit second élément fibreux.

11. Procédé pour la réalisation d'une pièce de matière composite comportant un panneau pourvu d'une nervure, procédé selon lequel on réalise un premier élément fibreux (2) représentatif dudit panneau et un second élément fibreux (3), représentatif de ladite nervure et présentant au moins une aile d'appui (3A) et une aile de raidissement (3B) orthogonales l'une à l'autre, on applique ladite aile d'appui (3A) dudit second élément fibreux (3) contre ledit premier élément fibreux (2) et on solidarise, par des points de piqûre (4B), ledit premier élément fibreux (2) et ladite aile d'appui (3A) dudit second élément fibreux (3),
caractérisé en ce qu'on introduit, à travers la face dudit premier élément fibreux opposée audit second élément fibreux et par piquage sans nouage d'un fil continu (4) à l'aide d'une aiguille (33,40), des fibres transversales (4A) sur toute l'étendue dudit premier élément fibreux (2), de telle façon que lesdites fibres transversales (4A), qui se trouvent en regard de ladite aile d'appui (3A) dudit second élément fibreux (3), forment lesdits points de piqûre (4B) solidarisant lesdits premier et second éléments fibreux et que certaines (4A1) desdites fibres transversales (4A) se trouvent à l'aplomb de l'aile de raidissement (3B) dudit second élément fibreux (3), après quoi on introduit la matière de la matrice dans lesdits éléments ainsi solidarisés, et on procède au durcissement de la matière de la matrice, en maintenant lesdits éléments solidarisés à la forme désirée pour ladite pièce.

12. Procédé selon la revendication 11,
caractérisé en ce que les deux éléments sont initialement imprégnés d'un liant souple.

13. Procédé selon la revendication 12,
caractérisé en ce que ledit liant souple est éliminé après l'opération de piquage et avant l'opération d'introduction de la matière de la matrice.

14. Procédé selon la revendication 12,
caractérisé en ce que ledit liant souple est de type durcissable et est conservé lors de l'opération d'introduction de la matière de la matrice, de sorte que ledit liant souple participe à la formation de la matrice.

## Claims

1. Method for producing a fibrous reinforcement (1) for a component of composite material comprising a panel provided with a rib, according to which method a first fibrous element (2) representing the said panel and a second fibrous element (3), representing the said rib and having at least one bearing flange (3A) and one stiffening flange (3B) which are orthogonal to each other, are produced, the said bearing flange (3A) of the said second fibrous element (3) is applied against the said first fibrous element (2) and the said first fibrous element (2) and the said bearing flange (3A) of the said second fibrous element (3) are joined together by means of stitches (4B),
characterized in that transverse fibres (4A) are inserted over the whole extent of the said first fibrous element (2), through the opposite face of the said first fibrous element to the said second fibrous element and by the stitching without knotting of a continuous filament (4) by means of a needle (33, 40), so that the said transverse fibres (4A), which are located opposite the said bearing flange (3A) of the said second fibrous element (3), form the said stitches (4B) joining the said first and second fibrous elements together and some (4A1) of the said transverse fibres are located vertically in line with the stiffening flange (3B) of the said second fibrous element (3).

2. Method according to Claim 1,
characterized in that, during the stitching operation, the travel of the said needle (33, 40) is adjusted in order to adapt it, at every instant, to the thickness of fibrous material which is located vertically in line with the stitching needle (33, 40).

3. Method according to Claim 1,
characterized in that transverse fibres are furthermore inserted through the face of the said first fibrous element which is on the side where the said second fibrous element is located.

4. Method according to Claim 1,
characterized in that the said transverse fibres (4A) are arranged parallel to the thickness of the said first fibrous element.

5. Method according to Claim 1,
characterized in that the said transverse fibres (4A) are inclined with respect to the thickness of the said first fibrous element.

6. Method according to Claim 5, in which the said transverse fibres are arranged in successive rows (5i),
characterized in that the inclination of the transverse fibres (4A) of one row is the opposite of the inclination of the transverse fibres of the adjacent row.

7. Method according to Claim 1,
characterized in that the said transverse fibres are in the shape of portions of circles.

8. Method according to Claim 1,
characterized in that the said second fibrous element (3) is formed by a single angle-shaped element.

9. Method according to Claim 1,
characterized in that the said second fibrous element has a T-shaped cross section and is itself formed of two fibrous elements (64) which are joined to each other and are each in the shape of an angle.

10. Component of composite material comprising a panel provided with a rib and consisting of a fibrous reinforcement and of a matrix, the said reinforcement including at least two fibrous distinct elements, the first of which represents the said panel while the second fibrous element represents the said rib and has at least one bearing flange and one stiffening flange which are orthogonal to each other,
characterized in that the said first fibrous element comprises transverse fibres (4A, 4A1) over its whole extent, including opposite the stiffening flange of the said second fibrous element.

11. Method for producing a component of composite material comprising a panel provided with a rib, according to which method a first fibrous element (2) representing the said panel and a second fibrous element (3), representing the said rib and having at least one bearing flange (3A) and one stiffening flange (3B) which are orthogonal to each other, are produced, the said bearing flange (3A) of the said second fibrous element (3) is applied against the said first fibrous element (2) and the said first fibrous element (2) and the said bearing flange (3A) of the said second fibrous element (3) are joined together by means of stitches (4B),
characterized in that transverse fibres (4A) are inserted over the whole extent of the said first fibrous element (2), through the opposite face of the said first fibrous element to the said second fibrous element and by the stitching without knotting of a continuous filament (4) by means of a needle (33, 40), so that the said transverse fibres (4A), which are located opposite the said bearing flange (3A) of the said second fibrous element (3), form the said stitches (4B) joining the said first and second fibrous elements together and some (4A1) of the said transverse fibres (4A) are located vertically in line with the stiffening flange (3B) of the said second fibrous element (3), after which the matrix material is injected into the said elements thus joined together, and the curing of the matrix material is carried out, while keeping the said joined elements in the shape desired for the said component.

12. Method according to Claim 11,
characterized in that the two elements are initially impregnated with a flexible binder.

13. Method according to Claim 12,
characterized in that the said flexible binder is removed after the stitching operation and before the operation of injecting the matrix material.

14. Method according to Claim 12,
characterized in that the said flexible binder is of a curable type and is retained during the operation of injecting the matrix material, so that the said flexible binder contributes to the formation of the matrix.

## Patentansprüche

1. Verfahren zur Herstellung einer Faserverstärkung (1) für ein Verbundwerkstoffbauteil, das eine mit einer Rippe versehene Platte aufweist, Verfahren gemäß dem ein erstes, für die besagte Platte repräsentatives Faserelement (2) und ein zweites, für die besagte Rippe repräsentatives und wenigstens einen senkrecht zueinander angeordneten Stützflügel (3A) und einen Versteifungsflügel (3B) umfassendes Faserelement (3) realisiert wird, bei dem der besagte Stützflügel (3A) des besagten zweiten Faserelements (3) gegen das erste Faserelement (2) gelegt und durch Steppstiche (4B) das besagte erste Faserelement (2) und der besagte Stützflügel (3A) des besagten zweiten Faserelements (3) miteinander verbunden werden,
dadurch gekennzeichnet, daß durch die dem besagten zweiten Faserelement entgegengesetzte Seite des ersten Faserelements hindurch und durch Steppen ohne Verknüpfung eines endlosen Fadens (4) mit Hilfe einer Nadel (33, 40) auf der gesamten Ausdehnung des besagten ersten Faserelements (2) Querfasern (4A) derart eingebracht werden, daß die besagten Querfasern (4A), die sich gegenüber dem besagten Stützflügel (3A) des besagten zweiten Faserelements (3) befinden, die besagten Steppstiche (4B) bilden, mit denen das besagte erste und zweite Faserelement miteinander verbunden werden, und daß einige (4A1) der besagten Querfasern (4A) sich in der Senkrechten des Versteifungsflügels (3B) des besagten zweiten Faserelements (3) befinden.

2. Verfahren gemäß Anspruch 1,
dadurch gekennzeichnet, daß beim Steppen der Weg der besagten Nadel (33, 40) geregelt wird, um ihn jederzeit an die Dicke des Faserstoffes, der sich unter der Steppnadel (33, 40) befindet, anzupassen.

3. Verfahren gemäß Anspruch 1,
dadurch gekennzeichnet, daß außerdem Querfasern durch die Vorderseite des besagten ersten Faserelements eingeführt werden, auf deren Seite sich das besagte zweite Faserelement befindet.

4. Verfahren gemäß Anspruch 1,
dadurch gekennzeichnet, daß die besagten Querfasern (4A) parallel zur Dicke des besagten ersten Faserelements angeordnet sind.

5. Verfahren gemäß Anspruch 1,
dadurch gekennzeichnet, daß die besagten Querfasern (4A) schräg zur Dicke des besagten ersten Faserelements verlaufen.

6. Verfahren gemäß Anspruch 5, bei dem die besagten Querfasern in aufeinanderfolgenden Reihen (5i) angeordnet sind,
dadurch gekennzeichnet, daß die Neigung der Querfasern (4A) einer Reihe der Neigung der Querfasern der angrenzenden Reihe entgegengesetzt ist.

7. Verfahren gemäß Anspruch 1,
dadurch gekennzeichnet, daß die besagten Querfasern die Form von Kreisabschnitten haben.

8. Verfahren gemäß Anspruch 1,
dadurch gekennzeichnet, daß das besagte zweite Faserelement (3) von einem einzigen winkelförmigen Element gebildet wird.

9. Verfahren gemäß Anspruch 1,
dadurch gekennzeichnet, daß das besagte zweite Faserelement einen T-förmigen Querschnitt hat und selbst aus zwei miteinander verbundenen Faserelementen (64) besteht, die jeweils die Form eines Winkels haben.

10. Verbundwerkstoffteil, das eine mit einer Rippe versehene Platte beinhaltet und aus einer Faserverstärkung und einer Matrix gebildet wird, wobei die besagte Verstärkung mindestens zwei einzelne Faserelemente umfaßt, von denen das erste repräsentativ für die besagte Platte ist, während das zweite Faserelement repräsentativ für die besagte Rippe ist und mindestens einen senkrecht zueinander angeordneten Stützflügel und einen Versteifungsflügel aufweist,
dadurch gekennzeichnet, daß das besagte erste Faserelement in seiner gesamten Ausdehnung, einschließlich gegenüber dem Versteifungsflügel des besagten zweiten Faserelements, Querfasern (4A, 4A1) besitzt.

11. Verfahren für die Herstellung eines Verbundwerkstoffteiles, das eine mit einer Rippe versehende Platte umfaßt, Verfahren nach dem ein erstes, für die besagte Platte repräsentatives Faserelement (2) hergestellt wird und ein zweites Faserelement (3), das repräsentativ für die besagte Rippe ist und mindestens einen senkrecht zu einander angeordneten Stützflügel (3A) und einen Versteifungsflügel (3B) aufweist, wobei der besagte Stützflügel (3A) des besagten zweiten Faserelements (3) an das besagte erste Faserelement (2) angelegt wird und das besagte erste Faserelement (2) und der besagte Stützflügel (3A) des besagten zweiten Faserelements (3) durch Steppstiche miteinander verbunden werden,
dadurch gekennzeichnet, daß durch die dem zweiten Faserelement entgegengesetzte Vorderseite des besagten ersten Faserelements hindurch und durch Steppen ohne Verknotung eines endlosen Fadens (4) mit Hilfe einer Nadel (33, 40) auf der gesamten Ausdehnung des besagten ersten Faserelements (2) Querfasern (4A) derart eingeführt werden, daß die besagten Querfasern (4A), die sich gegenüber dem besagten Stützflügel (3A) des besagten zweiten Faserelements (3) befinden, die besagten Steppstiche (4B) bilden, mit denen das genannte erste und zweite Faserelement miteinander verbunden werden, und daß einige (4A1) der besagten Querfasern (4A) sich in der Senkrechten des Versteifungsflügels des besagten zweiten Faserelements (3) befinden, wonach in die so miteinander verbundenen Elemente der Matrixwerkstoff eingebracht und der Matrixwerkstoff gehärtet wird, indem die besagten miteinander verbundenen Elemente in der für das besagte Teil gewünschten Form gehalten werden.

12. Verfahren gemäß Anspruch 11,
dadurch gekennzeichnet, daß die beiden Elemente eingangs mit einem elastischen Bindemittel imprägniert werden.

13. Verfahren gemäß Anspruch 12,
dadurch gekennzeichnet, daß das elastische Bindemittel nach dem Steppvorgang und vor dem Einführen des Matrixwerkstoffes entfernt wird.

14. Verfahren gemäß Anspruch 12,
dadurch gekennzeichnet, daß das besagte elastische Bindemittel härtbar ist und beim Einführen des Matrixwerkstoffes belassen wird, sodaß das besagte elastische Bindemittel an der Bildung der Matrix beteiligt ist.
